# EUROPEAN PATENT SPECIFICATION

(11) **EP 1 732 297 B1**
(45) Date of publication and mention of the grant of the patent: **29.07.2009**
(21) Application number: 05012536.8
(22) Date of filing: 10.06.2005
(51) Int. Cl.: H04M 1/725, G06F 9/445

(54) **Processor controlled device with different operation modes**
Prozessorgesteuertes Gerät mit verschiedenen Betriebsarten
Dispositif commandé par processeur avec différents modes de fonctionnement

(43) Date of publication of application: 13.12.2006
(73) Proprietor: Sony Ericsson Mobile Communications AB, 221 88 Lund (SE)
(72) Inventor: Bolanowski, Wladyslaw, 230 40 Bara (SE); Ritzau, Tobias, 240 14 Veberöd (SE)
(74) Representative: Banzer, Hans-Jörg

(56) References cited:
- EP-A- 1 058 187
- WO-A-98/38820
- US-A- 5 812 857
- US-A1- 2003 027 563

## Description

### TECHNICAL FIELD OF THE INVENTION

The present invention relates to a processor controlled device, in particular to an electronic communication and/or multimedia device which comprises a central processing unit controlling the operation of the device wherein said device is operable in a plurality of different operation modes. Furthermore, the present invention relates to a method for operating an electronic communication and/or multimedia device. Said method might in particular be used for distributing and updating information or data contained in memory means of the device.

### DESCRIPTION OF RELATED ART

With the rapid and continuous advancement of software and hardware technology, maintenance of existing devices and software components presents an ever-increasing challenge. Routine installation of information updates and patches has become a recognised necessity to ensure that the devices are kept fully functional over the operational life times. Unfortunately, for many devices and applications update management is extremely time-consuming and often requires a temporary deactivation of the device.

If - for example - the device is a mobile phone, there are often scenarios in which the normal functionality of the phone is discontinued due to maintenance operations or some other kind of operation that is not possible to combine with the standard mode of the mobile phone operation. An example is the so-called firmware update over the air (FOTA) which is offered by cellular network operators in order to update the functionality of the phone. During the code update phase of an FOTA service, more or less the entire code stored in memory means of the phone is being updated in order to upgrade it to a newer software version. During this phase, the user has to wait until this update operation is completed before a normal use of the phone is again possible. In the case of an FOTA, depending on the kind of flash memory that is being used in the phone, the mobile phone is discontinued from said standard operation for a relative long time.

A possible solution in order to avoid this problem is the usage of code shadowing. In this case, the entire code is being copied from a flash memory of the phone to a RAM at the start-up of the phone. A normal operation of the phone is maintained by allowing a code execution from the RAM while a new software version is being prepared in the flash memory. However, in this case the problem might arise that the file system is as well an object for the upgrade through FOTA and must therefore be synchronised afterwards. The main problem, however, is that code shadowing is expensive since it requires as much RAM as the whole size of the code.

A more cost-efficient way to execute code from a RAM is the use of demand paging. This method reduces the RAM needed for code execution by 30-50% compared with code shadowing. However, in this case only a part of the code is loaded into RAM. In case a new function is started, a new page might be requested to be loaded from the flash memory while the flash memory is actually in a state of total reorganisation by FOTA.

The problem mentioned above arises not only with the usage of mobile phones. Generally, portable electronic devices often lack the ability to perform automated update operations in a convenient and reliable manner. Since, however, increased sophistication of updatable electronic devices and software often necessitates frequent maintenance where updates are made available and desirably applied on a weekly or monthly basis, there is a need for an improved update process that allows a reliable update of hardware and/or software systems without completely constricting the operation of the system.

Document EP 1 058 187 A1 discloses a method for downloading a program into a processor control device including the steps of copying an executable part of a first version of the program from a first zone of a flash memory into a RAM memory. The executable part of the first version of the program is then executed from the RAM while simultaneously a second version of the program is loaded into a second zone of the flash memory.

### SUMMARY

The solution to this problem is based on the idea of providing an electronic device which is operable in a so-called reduced mode in which a part of the data or code defining the operation of the device is copied into a specific memory wherein the operation of the device in said reduced mode is generally only carried out on the basis of these copied data. In contrast to the known method of demand paging, the data that are necessary in order to run the reduced mode are completely identified at the initiation of the reduced mode and copied to the specific memory means. Thus, during the execution of the reduced mode it is not nay longer necessary to access data that might be updated at the same time. The conflict situation mentioned above in relation with demand paging is therefore avoided.

Thus, in accordance with the present invention, a processor controlled device, in particular electronic communication device or multimedia device, is revealed comprising a central processing unit adapted to control the operation of said device, wherein the central processing unit in a standard mode is adapted to carry out the operation of the device on the basis of data stored in first and/or second memory means of said device, wherein the central processing unit in a reduced mode of said device is adapted to copy a part of the data stored in said first memory means into said second memory means, said data being copied to the second memory means being identified at the initiation of said reduced mode, and wherein the central processing unit in said reduced mode is adapted to mainly carry out the operation of said device only on the basis of the data contained in said second memory means. Hereby a plurality of reduced modes is selectable wherein the data copied from said first memory means to said second memory means depend on the reduced mode selected and said first memory means comprise an area containing user content data, wherein in said reduced mode the central processing unit is also allowed to access these data for reading and writing.

Furthermore, a method of operating a processor controlled device, in particular an electronic communication device or a multimedia device is revealed wherein the normal operation of the device is carried out on the basis of data stored in first and/or second memory means of said device, the method further comprising the step of operating the device in a reduced mode in which at first a part of the data stored in said first memory means and being necessary for running the reduce mode is identified and copied into said second memory means of said device and the operation of said device in said reduced mode is mainly carried out only on the basis of the data contained in said second memory means. Hereby, a plurality of reduced modes is selectable wherein the data copied from said first memory means to said second memory means depend on the reduced mode selected and said first memory means comprise an area containing user content data, wherein in said reduced mode these data may also be accessed.

The solution in accordance with the present invention provides the possibility of updating the data or software contained in the first memory means while a basic functionality of the device is still maintained. Thus, in contrast to present solutions used for updating the software - for example - of a mobile phone, the phone can still be used during FOTA or another service having influence on the content of the data.

The present invention however is not reduced to the scenario of updating the software contained in the first memory means. The reduced mode for operating the device might also be selected in other situations. In particular, this inventive feature might also be useful in case that the power consumption of the device has to be temporarily reduced. For example, in case the battery level is low and the user of the device still wants to keep the device working but with a limited set of functionality, a specific power reduction reduced mode might be selected which still provides the basic functionality of the device but reduces the power consumption by not providing other functionality.

Thus, in accordance with a preferred embodiment of the present invention, the functionality of said device might be reduced to a specific function depending on the reduced mode selected.

An access to specific parts of the first memory means is still allowed. In this case, the first memory means preferably comprises an area containing user content data - e.g., MP3-files or the like - that might also be accessed by the CPU. At the same time, the data of said fist memory means might be accessed by an update service in order to update the software and/or functionality of the device. When the reduced mode is again left, the normal execution mode might be initiated by synchronising the data contained in the second memory means with the data of the first memory means in case the data have been amended.

Preferably, the first memory means is a flash memory, a USB memory device, a hard drive or a comparable memory means while the second memory means is a random access memory (RAM).

Accordingly, the present invention provides a possibility of allowing the user of a device to use still a limited set of functions while the data contained in the memory of the device can be updated. Thus, it is possible to make a phone call or listen to music in a mobile phone while the remaining software is being upgraded via FOTA or another service. In contrast to today's solutions wherein no functionality at all is available during the software update, the present invention provides a significant improvement.

### BRIEF DESCRIPTION OF THE DRAWINGS

The above-mentioned aspects as well as other aspects, advantages and novel features of the present invention will become apparent upon reading the following detailed description with reference to the accompanying drawings.
- Fig. 1: shows a mobile phone providing a plurality of reduced modes in accordance with the present invention;
- Fig. 2: is a block diagram illustrating the different steps of operating the mobile phone of Fig. 1 in a reduced mode;
- Fig. 3: is a schematic view showing the handling of data stored in the different memory means during a first reduced mode and
- Fig. 4: shows the data handling during a second reduced mode.

### DETAILED DESCRIPTION OF EMBODIMENT

In the following, the present invention is explained with reference to a mobile phone which represents a preferred embodiment of the present invention. Nevertheless, it has to be emphasised that the concept of the present invention is not reduced to mobile phones but might also be used with other devices that are controlled by a processor, e.g., other communication and/or multimedia devices. Generally, the inventive concept of providing a reduced mode might always be useful in case the software of the device has to be updated from time to time or the power consumption has to be temporarily reduced.

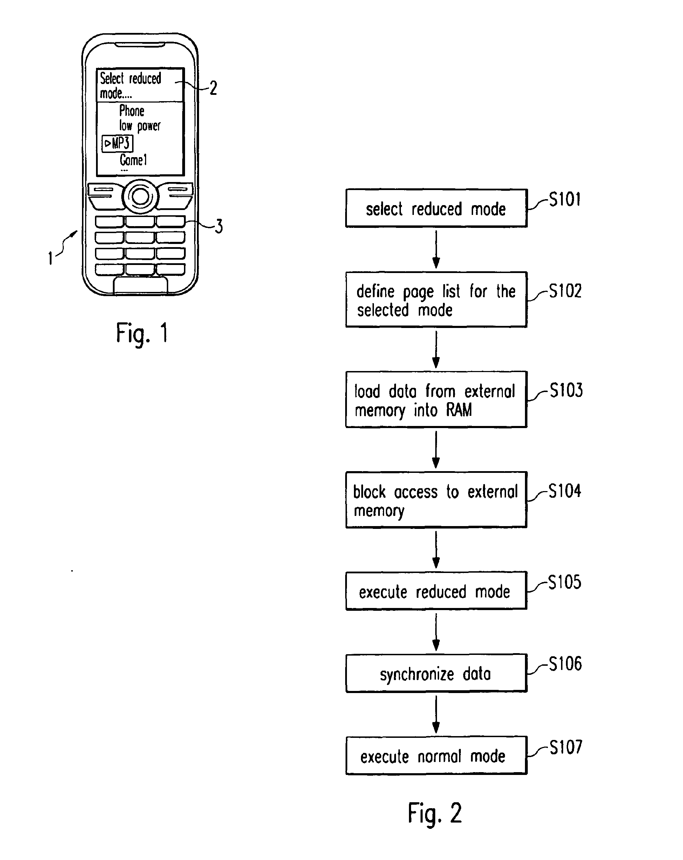

The mobile phone 1 shown in Fig. 1 provides a plurality of functions being related to communication services and other multimedia applications. Thus, besides for making phone calls, the mobile phone 1 might also be used for playing games or as an MP3 music player. Furthermore, also a camera function might be provided by integrating a digital camera within the phone or connecting the phone 1 to an external camera device.

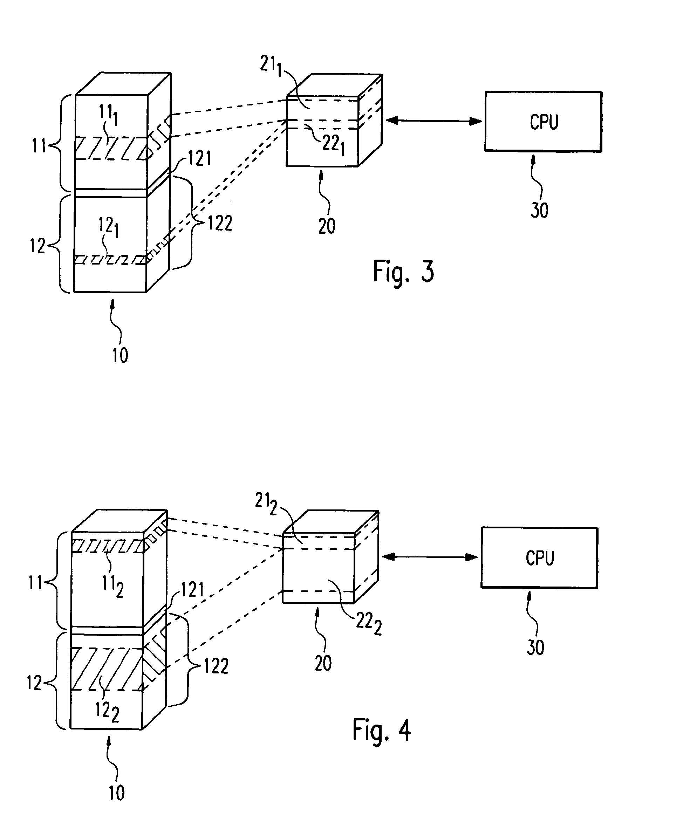

The different applications of the mobile phone 1 are controlled by a central processing unit 30 shown in Fig. 3. This central processing unit 30 operates the phone 1 on the basis of data stored in two memory means. As schematically shown in Fig. 3, the mobile phone comprises first memory means 10 and second memory means 20. The first memory means 10 is the main memory of the mobile phone 1 and is sub-divided in two parts 11 and 12. The first part 11 is the code section comprising the execution code for the different applications of the mobile phone 1. When running a specific application of the mobile phone 1, the central processing unit 30 executes the code being related to the selected application. The second part of the main memory 10 is the data section 12 comprising additional data also being related to the different applications. In contrast to the data stored in the code section 11, the data of the data section 12 do not represent execution code but represent additional data being necessary for running the applications. For example, the data section 12 might comprise audio data which are play-backed when the audio player function of the mobile phone is selected.

As shown in Fig. 3 and 4, the data section is again sub-divided in a system part 121 and a user content part 122. While the user content part 122 contains the additional data mentioned above in one file system partition, the system part 121 comprises e.g. system settings and other system files in a separate file system partition. Furthermore, this system part 121 also comprises a look-up table containing information being necessary in order to identify the data being necessary for running a reduced mode. The function of this look-up table is explained in more detail below.

The first memory means 10 is also called external memory and might be represented by a flash memory, a USB memory device, a hard drive or another comparable memory device.

Additionally, the mobile phone comprises a second memory 20 which is preferably represented by a random access memory (RAM). Said random access memory 20 might be used in order to copy data from the first memory means 10 that are repeatedly used by the central processing unit 30. The RAM 20 allows a faster access to the stored data and therefore helps to improve the performance of the whole mobile phone 1.

Thus, during a standard operation of the mobile phone 1, the central processing unit 30 mainly accesses the RAM 20 in order to execute the code stored therein. Nevertheless, also the data stored in the first memory means 10 are accessed by the central processing unit 30 in order to run the mobile phone. Accordingly, the operation of the mobile phone 1 in the standard mode carried out on the basis of all data stored in the first memory means 10.

From time to time, the data stored in the first memory means 10 must be updated in order to upgrade the functionality of the mobile phone 1. By updating the data contained in said first memory means 10, the functionality of the mobile phone 1 might be improved or new applications might be made available for a user of the phone 1. This update might in particular take place in the form of a firmware update over the air (FOTA) wherein the data contained in the code section 11 of the main memory 10 are replaced by new data that are wirelessly transmitted. In this way, the software controlling the function of the mobile phone 1 is renewed.

Up to now, the mobile phone 1 had to be discontinued from the standard operation during such a software update. However, depending on the kind of memory used for the first memory means 10, the user had to wait for a relatively long time until the mobile phone 1 was again useable.

In order to avoid this problem, a specific method of operating the mobile phone 1 is introduced in accordance with the present invention which will be explained in the following.

The present invention is based on the idea of providing a reduced operation mode wherein a subset of the first memory means 10 is copied into the second memory means 20 and an access to the first memory means 10 is restricted. During the reduced mode, the operation of the mobile phone 1 is basically carried out on the basis of the data stored in the second memory means 20. Since the storage space of the second memory means 20 is considerably smaller than the storage space of the first memory means 10, the functionality of the mobile phone 1 must most likely be restricted. Nevertheless, at least a few functions are still available to the user of the phone 1 during this inventive reduced mode.

According to a preferred embodiment of the present invention, a plurality of different reduced modes is available. As shown in Fig. 1, the user of the phone 1 is able to choose - e.g., by using the keypad 3 - between different reduced modes that provide different functionality. As it will be recognized by a person skilled in the art, other ways of selecting a reduced mode ― for example voice control etc. - might also be used. A first mode "Phone" shown on the display 2 of the phone 1 might for example be selected in order to maintain the wireless communication applications during the reduced mode. Another mode "Game 1" might e.g. be used in order to play a specific game while a third reduced mode provides the functionality of an MP3-player in order to listen to music during the reduced mode. As further shown in Fig. 1, another so-called "low Power" mode might be selected in order to reduce the power consumption of the mobile phone 1. In this specific mode, only applications are available which do not require a high amount of power. For example, a camera function of the phone 1 might be disabled during this reduced power mode.

As mentioned above, a specific feature of the reduced mode is that the operation of the mobile phone 1 is carried out basically on the basis of data stored in the second memory means, i.e. in the RAM 20. Thus, depending on the reduced mode selected, specific data have to be transferred from the first memory means 10 into the RAM 20. The rules for the selection of the data can be implemented during the development of the mobile phone 1 and can be obtained either by analysis or by experimentation. This information is stored in the look-up table mentioned above and allows the system to identify the data that have to be copied to the second memory means.

It is a specific feature of the present invention that the data that are necessary for running a reduced mode are identified at the initiation of the reduced mode. In contrast to the known method of demand paging, an access to additional data afterwards in order to continue the operation of the device is not necessary.

After the data have been copied into the RAM 20, the access to the first memory means 10 is restricted. Now, the mobile phone 1 is in the reduced mode wherein the central processing unit 30 controls the operation of the phone 1 only on the basis of the data stored in the RAM 20. As mentioned above, a limited functionality of the phone 1 might be available depending on the reduced mode selected. For example, the phone might be in an idle mode, might be used as a music player or for playing games. This reduced mode, however, is not necessarily a subset of the normal functionality of the phone. It would also be possible to use specifically designed software for this reduced mode.

While the phone 1 is operated in the reduced mode, an access to the blocked memory 10 is usually forbidden as mentioned above. Under specific circumstances, however, it might be possible to leave the reduced mode in order to fetch more data from the first memory means 10 and to return to the reduced mode afterwards. For example, the CPU 30 might access data contained in the user content part 122 of the data section 12 in order to play a specific music file. Further, in case the software of the device is not being updated during the reduced mode, an additional fetching of data (also from the code section 11) might also be allowed. In case it is not possible to leave the reduced mode, the user of the phone 1 is notified in case he initiates an action that would require the access to data stored in the first memory means 10. In this case, on the display 2 of the phone information would be shown informing the user of the restrictions of the current execution mode.

However, during this reduced mode, the data stored in the first memory might be accessed and updated via FOTA or another service. Thus, the user is still able to use the applications provided by the selected reduced mode while the firmware of the phone is updated. In contrast to solutions known in the prior art, it is therefore still possible to use the phone 1.

Finally, when the reduced mode is left by the user in order to enter the normal operation mode of the phone 1, the data stored in the first memory 10 means must probably be synchronised with the data of the RAM 20, e.g., call lists or the file systems must be updated. In case the software of the phone 1 has been updated during the reduced mode, the phone 1 may - if required - afterwards be re-booted in order to execute the new software.

The different steps of the present invention of operating a device in a reduced mode are shown in Fig. 2. As mentioned above, in a first step S101 a reduced mode is selected. In case only a single reduced mode is available, the user of the mobile phone 1 simply has to initiate this reduced mode. In case a plurality of different reduced modes is available as shown in Fig. 1, the user has to select one reduced mode offering the application(s) desired.

After the reduced mode has been selected, a page list is defined for the selected mode in step S102. As shown in Figs. 3 and 4, the data necessary in order to carry out the selected reduced mode are identified by using the look-up table. In Fig. 3, a first data block 11₁ from the code section 11 and a data block 12₁ from the data section are identified wherein the data contained in both blocks 11₁ and 12₁ are necessary in order to carry out the application provided by the selected reduced mode. In Fig. 4 however, two other data blocks 11₂ and 12₂ are selected that belong to a different application since another reduced mode has been selected.

Referring again to Fig. 2, in the following step S 103 the data selected in step S 102 are copied from the first memory means 10 to the second memory means 20 forming there new data blocks 21₁, 22₁ and 21₂, 22₂. Afterwards, the access to the first memory 10 is restricted for the CPU 30.

The reduced mode is now executed in the following step S105. In this mode, the central processing unit 30 controls the operation of the mobile phone 1 only on the basis only of data stored in the second memory means 20. During this reduced mode, it is, however, still possible to amend the data in the first memory means 10. In this way, during the execution of the reduced mode, these data might be updated by FOTA or another service. Further, as already mentioned above, it might be possible to temporarily leave the reduced mode in order to fetch more data from the first memory means 10. However, usually the CPU 30 only accesses the data contained in the RAM 20.

After the reduced mode is left, a synchronisation of the data stored in the first memory means 10 might be necessary. In this case, the data contained in the RAM 20 are again transferred into the corresponding data blocks of the first memory means 10. In this way, call lists or file systems may be updated that have been amended during the execution of the reduced mode.

After the synchronisation in step S106, the mobile phone is again operated in the normal mode in step S 107. Depending on the reason for entering the reduced execution mode, it might be necessary to re-boot the mobile phone 1. This might in particular be necessary in case the remaining data have been updated in order to carry out an update of the firmware.

As already mentioned above, the present invention is not restricted to the use of mobile phones. Instead, in all cases the software of an electronic device has to be updated, the present invention might be useful in order to provide a reduced functionality during the update process. The present solution opens a new possibility to allow a user to still use a limited set of functionality while the software is being upgraded via an FOTA or another service. Additionally, the present invention might also be useful in case there is a need for a temporary reduction of the power consumption, e.g. when the battery level is low and the user would like to keep the device working but with a limited set of functionality.

## Claims

1. Processor controlled device, in particular electronic communication device or multimedia device, comprising a central processing unit (30) adapted to control the operation of said device (1),
wherein the central processing unit (30) in a standard mode is adapted to carry out the operation of the device (1) on the basis of data stored in first and/or second memory means (10, 20) of said device (1),
wherein the central processing unit (30) in a reduced mode of said device (1) is adapted to copy a part of the data stored in said first memory means (10) into said second memory means (20), said data being copied to the second memory means (20) being identified at the initiation of said reduced mode, and
wherein the central processing unit (30) in said reduced mode is adapted to mainly carry out the operation of said device (1) only on the basis of the data contained in said second memory means (20),
**characterized in**
**that** a plurality of reduced modes is selectable wherein the data copied from said first memory means (10) to said second memory means (20) depend on the reduced mode selected and
**that** said first memory means (10) comprise an area (122) containing user content data, wherein in said reduced mode the central processing unit (30) is also allowed to access these data for reading and writing.

2. Processor controlled device according to claim 1,
**characterized in**
**that** the central processing unit (30) is adapted to carry out the identification of the data that are copied to the second memory means (20) on the basis of information contained in one of the memory means (10, 20).

3. Processor controlled device according to claim 2,
**characterized in**
**that** one of the memory means (10, 20) comprises a look-up table that assigns data blocks of the first memory means (10) to the reduced mode(s).

4. Processor controlled device according to claim 3,
**characterized in**
**that** the information contained in said look-up table is defined during the development step of the product.

5. Processor controlled device according to one of the claims 1 to 4,
**characterized in**
**that** the central processing unit (30) in said reduced mode is adapted to reduce the functionality of said device (1).

6. Processor controlled device according to one of the preceding claims,
**characterized in**
**that** only a specific function of said device (1) is available in said reduced mode.

7. Processor controlled device according to one of the preceding claims,
**characterized in**
**that** during said reduced mode, at least a part of the data stored in said first memory means (10) is updated.

8. Processor controlled device according to one of the preceding claims,
**characterized in**
**that** said second memory means (20) is a random access memory (RAM).

9. Processor controlled device according to one of the preceding claims,
**characterized in**
**that** said first memory means (10) is a flash memory, a USB memory device and/or a hard drive.

10. Processor controlled device according to one of the preceding claims,
**characterized in**
**that** said device is a mobile phone (1).

11. A method of operating a processor controlled device, in particular an electronic communication device or a multimedia device wherein the normal operation of the device (1) is carried out on the basis of data stored in first and/or second memory means (10, 20) of said device (1),
the method further comprising the step of operating the device (1) in a reduced mode in which at first a part of the data stored in said first memory means (10) and being necessary for running the reduce mode is identified and copied into said second memory means (20) of said device (1) and the operation of said device (1) in said reduced mode is mainly carried out only on the basis of the data contained in said second memory means (20),
**characterized in**
**that** a plurality of reduced modes is selectable wherein the data copied from said first memory means (10) to said second memory means (20) depend on the reduced mode selected and
**that** said first memory means (10) comprise an area (122) containing user content data, wherein in said reduced mode these data may also be accessed.

12. The method according to claim 11,
**characterized in**
**that** the identification of the data that are copied to the second memory means (20) is carried out on the basis of information contained in one of the memory means (10, 20).

13. The method according to claim 12,
**characterized in**
**that** one of the memory means (10, 20) comprises a look-up table that assigns data blocks of the first memory means (10) to the reduced mode(s).

14. The method according to claim 13,
**characterized in**
**that** the information contained in said look-up table is defined during the development step of the product.

15. The method according to one of the claims 11 to 14,
**characterized in**
**that** in said reduced mode the functionality of said device (1) is reduced.

16. The method according to one of the claims 11 to 15,
**characterized in**
**that** only a specific function of said device (1) is available in said reduced mode.

17. The method according to one of the claims 11 to 16,
**characterized in**
**that** during said reduced mode, at least a part of the data stored in said first memory means (10) is updated.

18. The method according to one of the claims 11 to 17,
**characterized in**
**that** said second memory means (20) is a random access memory (RAM).

19. The method according to one of the claims 11 to 18,
**characterized in**
**that** said first memory means (10) is a flash memory, a USB memory device and/or a hard drive.

20. The method according to one of the claims 11 to 19,
**characterized in**
**that** said device is a mobile phone (1).

## Patentansprüche

1. Von einem Prozessor gesteuerte Vorrichtung, insbesondere eine elektronische Kommunikationsvorrichtung oder Multimedia-Vorrichtung, welche eine Zentraleinheit (30) umfasst, die derart ausgestaltet ist, dass sie den Betrieb der Vorrichtung (1) steuert,
wobei die Zentraleinheit (30) in einer Standardbetriebsart derart ausgestaltet ist, dass sie den Betrieb der Vorrichtung (1) auf der Grundlage von Daten ausführt, welche in ersten und/oder zweiten Speichermitteln (10, 20) der Vorrichtung (1) gespeichert sind,
wobei die Zentraleinheit (30) in einer reduzierten Betriebsart der Vorrichtung (1) derart ausgestaltet ist, dass sie einen Teil der Daten, welche in den ersten Speichermitteln (10) gespeichert sind, in den zweiten Speichermitteln (20) speichert,
wobei die Daten, welche in die zweiten Speichermittel (20) gespeichert werden, bei einer Aktivierung der reduzierten Betriebsart identifiziert werden, und
wobei die Zentraleinheit (30) in der reduzierten Betriebsart derart ausgestaltet ist, dass sie den Betrieb der Vorrichtung (1) im Wesentlichen nur auf der Grundlage der Daten, welche in den zweiten Speichermitteln (20) enthalten sind, ausführt,
**dadurch gekennzeichnet,**
**dass** mehrere reduzierte Betriebsarten auswählbar sind, wobei die Daten, welche von den ersten Speichermitteln (10) zu den zweiten Speichermitteln (20) kopiert werden, von der ausgewählten reduzierten Betriebsart abhängen, und
**dass** die ersten Speichermittel (10) einen Bereich (122) umfassen, welcher Benutzerdaten enthält, wobei es der Zentraleinheit (30) in der reduzierten Betriebsart auch ermöglicht ist, auf diese Daten zum Lesen und zum Schreiben zuzugreifen.

2. Von einem Prozessor gesteuerte Vorrichtung nach Anspruch 1,
**dadurch gekennzeichnet,**
**dass** die Zentraleinheit (30) derart ausgestaltet ist, dass sie die Identifikation der Daten, welche zu den zweiten Speichermitteln (20) kopiert werden, auf der Grundlage einer Information durchführt, welche in den ersten und/oder in den zweiten Speichermitteln (10, 20) enthalten ist.

3. Von einem Prozessor gesteuerte Vorrichtung nach Anspruch 2,
**dadurch gekennzeichnet,**
**dass** die ersten und/oder die zweiten Speichermittel (10, 20) eine Verweistabelle umfassen, welche Datenblöcke der ersten Speichermittel (10) der reduzierten Betriebsart bzw. den reduzierten Betriebsarten zuweist.

4. Von einem Prozessor gesteuerte Vorrichtung nach Anspruch 3,
**dadurch gekennzeichnet,**
**dass** die Information, welche in der Verweistabelle enthalten ist, während des Entwicklungsschritts des Produkts definiert wird.

5. Von einem Prozessor gesteuerte Vorrichtung nach einem der Ansprüche 1 bis 4,
**dadurch gekennzeichnet,**
**dass** die Zentraleinheit (30) in der reduzierten Betriebsart derart ausgestaltet ist, dass sie die Funktionalität der Vorrichtung (1) reduziert.

6. Von einem Prozessor gesteuerte Vorrichtung nach einem der vorhergehenden Ansprüche,
**dadurch gekennzeichnet,**
**dass** nur eine bestimmte Funktion der Vorrichtung (1) in der reduzierten Betriebsart verfügbar ist.

7. Von einem Prozessor gesteuerte Vorrichtung nach einem der vorhergehenden Ansprüche,
**dadurch gekennzeichnet,**
**dass** während der reduzierten Betriebsart zumindest ein Teil der Daten, welche in den ersten Speichermitteln (10) gespeichert sind, aktualisiert wird.

8. Von einem Prozessor gesteuerte Vorrichtung nach einem der vorhergehenden Ansprüche,
**dadurch gekennzeichnet,**
**dass** die zweiten Speichermittel (20) ein Direktzugriffsspeicher (RAM) sind.

9. Von einem Prozessor gesteuerte Vorrichtung nach einem der vorhergehenden Ansprüche,
**dadurch gekennzeichnet,**
**dass** die ersten Speichermittel (10) ein Flash-Speicher, eine USB-Speichervorrichtung und/oder eine Festplatte sind.

10. Von einem Prozessor gesteuerte Vorrichtung nach einem der vorhergehenden Ansprüche,
**dadurch gekennzeichnet,**
**dass** die Vorrichtung ein Mobiltelefon (1) ist.

11. Verfahren zum Betrieb einer von einem Prozessor gesteuerten Vorrichtung, insbesondere einer elektronischen Kommunikationsvorrichtung oder einer Multimedia-Vorrichtung, wobei der normale Betrieb der Vorrichtung (1) auf der Grundlage von Daten ausgeführt wird, welche in ersten und/oder zweiten Speichermitteln (10, 20) der Vorrichtung (1) gespeichert sind,
wobei das Verfahren darüber hinaus den Schritt eines Betreibens der Vorrichtung (1) in einer reduzierten Betriebsart umfasst, in welcher zuerst ein Teil der Daten, welche in den ersten Speichermitteln (10) gespeichert sind und welche zum Ablauf der reduzierten Betriebsart notwendig sind, identifiziert und in die zweiten Speichermittel (20) der Vorrichtung (1) kopiert werden, und wobei der Betrieb der Vorrichtung (1) in der reduzierten Betriebsart im Wesentlichen nur auf der Grundlage der Daten, welche in den zweiten Speichermitteln (20) enthalten sind, ausgeführt wird,
**dadurch gekennzeichnet,**
**dass** mehrere reduzierte Betriebsarten auswählbar sind, wobei die Daten, welche von den ersten Speichermitteln (10) zu den zweiten Speichermitteln (20) kopiert werden, von der ausgewählten reduzierten Betriebsart abhängen, und
**dass** die ersten Speichermittel (10) einen Bereich (122) umfassen, welcher Benutzerdaten enthält, wobei auf diese Daten in der reduzierten Betriebsart auch zugegriffen werden kann.

12. Verfahren nach Anspruch 11,
**dadurch gekennzeichnet,**
**dass** die Identifizierung der Daten, welche zu den zweiten Speichermitteln (20) kopiert werden, auf der Grundlage einer Information ausgeführt wird, welche in den ersten und/oder den zweiten Speichermitteln (10, 20) enthalten ist.

13. Verfahren nach Anspruch 12,
**dadurch gekennzeichnet,**
**dass** die ersten und/oder die zweiten Speichermittel (10, 20) eine Verweistabelle umfassen, welche Datenblöcke der ersten Speichermittel (10) der reduzierten Betriebsart bzw. den reduzierten Betriebsarten zuweist.

14. Verfahren nach Anspruch 13,
**dadurch gekennzeichnet,**
**dass** die Information, welche in der Verweistabelle enthalten ist, während des Entwicklungsschritts des Produkts definiert wird.

15. Verfahren nach einem der Ansprüche 11 bis 14,
**dadurch gekennzeichnet,**
**dass** in der reduzierten Betriebsart die Funktionalität der Vorrichtung (1) reduziert wird.

16. Verfahren nach einem der Ansprüche 11 bis 15,
**dadurch gekennzeichnet,**
**dass** in der reduzierten Betriebsart nur eine bestimmte Funktion der Vorrichtung (1) verfügbar ist.

17. Verfahren nach einem der Ansprüche 11 bis 16,
**dadurch gekennzeichnet,**
**dass** während der reduzierten Betriebsart zumindest ein Teil der Daten, welche in den ersten Speichermitteln (10) gespeichert sind, aktualisiert wird.

18. Verfahren nach einem der Ansprüche 11 bis 17,
**dadurch gekennzeichnet,**
**dass** die zweiten Speichermittel (20) ein Direktzugriffspeicher (RAM) sind.

19. Verfahren nach einem der Ansprüche 11 bis 18,
**dadurch gekennzeichnet,**
**dass** die ersten Speichermittel (10) ein Flashspeicher, eine USB-Speichervorrichtung und/oder eine Festplatte sind.

20. Verfahren nach einem der Ansprüche 11 bis 19,
**dadurch gekennzeichnet,**
**dass** die Vorrichtung ein Mobiltelefon (1) ist.

## Revendications

1. Dispositif commandé par processeur, notamment un dispositif de communication électronique ou un dispositif multimédia, comprenant une unité centrale de traitement (30) apte à commander le fonctionnement dudit dispositif (1),
dans lequel l'unité centrale de traitement (30), dans un mode standard, est apte à mettre en oeuvre le fonctionnement du dispositif (1) sur la base de données stockées dans des premier et/deuxième moyens à mémoire (10, 20) dudit dispositif (1),
dans lequel l'unité centrale de traitement (30), dans un mode réduit dudit dispositif (1), est apte à copier une partie des données stockées dans ledit premier moyen à mémoire (10) vers ledit deuxième moyen à mémoire (20), lesdites données copiées vers ledit deuxième moyen à mémoire (20) étant identifiées lors du déclenchement dudit mode réduit, et
dans lequel l'unité centrale de traitement (30), dans ledit mode réduit, est apte à ne mettre en oeuvre principalement le fonctionnement dudit dispositif (1) que sur la base des données contenues dans ledit deuxième moyen à mémoire (20),
**caractérisé**
**en ce qu'**une pluralité de modes réduits peuvent être sélectionnés, les données copiées depuis ledit premier moyen à mémoire (10) vers ledit deuxième moyen à mémoire (20) dépendant du mode réduit sélectionné, et
**en ce que** lesdits premiers moyens à mémoire (10) comprennent une zone (122) contenant des données de contenus d'utilisateurs, dans lequel, dans ledit mode réduit, l'unité centrale de traitement (30) est également admise à accéder à ces données en lecture et en écriture.

2. Dispositif commandé par processeur selon la revendication 1,
**caractérisé**
**en ce que** l'unité centrale de traitement (30) est apte à effectuer l'identification des données qui sont copiées vers le deuxième moyen à mémoire (20) sur la base d'informations contenues dans l'un des moyens à mémoire (10, 20).

3. Dispositif commandé par processeur selon la revendication 2,
**caractérisé**
**en ce que** l'un des moyens à mémoire (10, 20) comprend une table de consultation qui affecte des blocs de données du premier moyen à mémoire (10) au ou aux mode(s) réduit(s).

4. Dispositif commandé par processeur selon la revendication 3,
**caractérisé**
**en ce que** les informations contenues dans ladite table de consultation sont définies pendant l'étape de développement du produit.

5. Dispositif commandé par processeur selon l'une des revendications 1 à 4,
**caractérisé**
**en ce que** l'unité centrale de traitement (30), dans ledit mode réduit, est apte à réduire la fonctionnalité dudit dispositif (1).

6. Dispositif commandé par processeur selon l'une des revendications précédentes,
**caractérisé**
**en ce que** seule une fonction particulière dudit dispositif (1) est disponible dans ledit mode réduit.

7. Dispositif commandé par processeur selon l'une des revendications précédentes,
**caractérisé**
**en ce que**, pendant ledit mode réduit, au moins une partie des données stockées dans ledit premier moyen à mémoire (10) est mise à jour.

8. Dispositif commandé par processeur selon l'une des revendications précédentes,
**caractérisé**
**en ce que** ledit deuxième moyen à mémoire (20) est une mémoire vive (RAM).

9. Dispositif commandé par processeur selon l'une des revendications précédentes,
**caractérisé**
**en ce que** ledit premier moyen à mémoire (10) est une mémoire flash, un dispositif à mémoire USB et/ou un lecteur de disque dur.

10. Dispositif commandé par processeur selon l'une des revendications précédentes,
**caractérisé**
**en ce que** ledit dispositif est un téléphone mobile (1).

11. Procédé de mise en fonctionnement d'un dispositif commandé par processeur, notamment d'un dispositif de communication électronique ou d'un dispositif multimédia, dans lequel le fonctionnement normal du dispositif (1) est mis en oeuvre sur la base de données stockées dans des premier et/ou deuxième moyens à mémoire (10, 20) dudit dispositif (1),
le procédé comprenant en outre l'étape de mise en fonctionnement du dispositif (1) dans un mode réduit dans lequel tout d'abord une partie des données stockées dans ledit premier moyen à mémoire (10) et nécessaires au fonctionnement du mode réduit est identifiée et copiée vers ledit deuxième moyen à mémoire (20) dudit dispositif (1) et le fonctionnement dudit dispositif (1) dans ledit mode réduit n'est principalement mis en oeuvre que sur la base des données contenues dans ledit deuxième moyen à mémoire (20),
**caractérisé**
**en ce qu'**une pluralité de modes réduits peuvent être sélectionnés, les données copiées depuis ledit premier moyen à mémoire (10) vers ledit deuxième moyen à mémoire (20) dépendant du mode réduit sélectionné, et
**en ce que** lesdits premiers moyens à mémoire (10) comprennent une zone (122) contenant des données de contenus d'utilisateurs, dans lequel, dans ledit mode réduit, il est également possible d'accéder à ces données.

12. Procédé selon la revendication 11,
**caractérisé**
**en ce que** l'identification des données qui sont copiées vers ledit deuxième moyen à mémoire (20) est effectuée sur la base d'informations contenues dans l'un des moyens à mémoire (10, 20).

13. Procédé selon la revendication 12,
**caractérisé**
**en ce que** le moyen à mémoire (10, 20) comprend une table de consultation qui affecte des blocs de données du premier moyen à mémoire (10) au ou aux mode(s) réduit(s).

14. Procédé selon la revendication 13,
**caractérisé**
**en ce que** les informations contenues dans ladite table de consultation sont définies pendant l'étape de développement du produit.

15. Procédé selon l'une des revendications 11 à 14,
**caractérisé**
**en ce que**, dans ledit mode réduit, la fonctionnalité dudit dispositif (1) est réduite.

16. Procédé selon l'une des revendications 11 à 15,
**caractérisé**
**en ce qu'**une seule fonction spécifique dudit dispositif (1) est disponible dans ledit mode réduit.

17. Procédé selon l'une des revendications 11 à 16,
**caractérisé**
**en ce que**, pendant ledit mode réduit, au moins une partie des données stockées dans ledit premier moyen à mémoire (10) est mise à jour.

18. Procédé selon l'une des revendications 11 à 17,
**caractérisé**
**e**n ce que ledit deuxième moyen à mémoire (20) est une mémoire vive (RAM).

19. Procédé selon l'une des revendications 11 à 18,
**caractérisé**
**en ce que** ledit premier moyen à mémoire (10) est une mémoire flash, un dispositif à mémoire USB et/ou un lecteur de disque dur.

20. Procédé selon l'une des revendications 11 à 19,
**caractérisé**
**en ce que** ledit dispositif est un téléphone mobile (1).
